# EUROPEAN PATENT APPLICATION

(11) **EP 4 224 035 A1**
(43) Date of publication of application: **09.08.2023**
(21) Application number: 22155695.4
(22) Date of filing: 08.02.2022
(51) Int. Cl.: F16H 3/66, F16H 3/00, B62M 6/65, B62M 11/16

(54) **TRANSMISSION DEVICE FOR A DRIVE**

(71) Applicant: MAHLE International GmbH, 70376 Stuttgart (DE)
(72) Inventor: Franco Revilla, Jose Vincente, 34810 Matalbaniega (ES)
(74) Representative: BRP Renaud & Partner mbB Rechtsanwälte Patentanwälte Steuerberater

(57) **Abstract**

The present invention relates to a transmission device (1) for a drive (50), which has an input shaft (2) and an output shaft (3), which are connected to one another via a planetary gearing (4). The planetary gearing (4) has two gear stages (5, 7). Each gear stage (5, 7) is connectable to the output shaft (3) via an associated clutch (6, 8).

Increased variability of transmission ratios between the input shaft (2) and the output shaft (3) is achieved by the clutches (6, 8) being arranged on the radially inner side (9) of the output shaft (3) and axially spaced from each other.

The invention further relates to a drive (50) with such a transmission device (1). The invention further relates to a pedelec (100) with such a drive (50).

## Description

The present invention relates to a transmission device for a drive, which has an input shaft, an output shaft and a planetary gearing connecting the input shaft to the output shaft. The invention further relates to a drive for a pedelec having such a transmission device. Furthermore, the invention relates to a pedelec with such a drive.

A drive for a pedelec usually has a transmission device. With the transmission device, it is possible to transmit a torque at an input shaft to an output shaft via various transmission ratios.

Transmission devices of this type are known, for example, from EP 2 122 197 B1 and EP 2 204 316 A1. These transmission devices comprise an input shaft connected in a torque proof manner to a rotor of an electric motor and an output shaft. A planetary gearing with two gear stages connects the input shaft to the output shaft. The respective gear stage can be connected to the output shaft by means of an associated clutch. The clutches are such that they each connect one of the gear stages to the output shaft depending on the direction of rotation of the input shaft. The clutches follow one another radially.

The present invention is concerned with the problem of providing improved or at least other embodiments for a transmission device of the type mentioned above, for a drive with such a transmission device, and for a pedelec with such a drive, which in particular eliminate disadvantages from the prior art. In particular, the present invention deals with the problem of providing improved or at least other embodiments for the transmission device, for the drive and for the pedelec, which are characterized in particular by an increased variability of transmission ratios.

This problem is solved according to the invention by the subjects of the independent claims. Advantageous embodiments are the subject of the dependent claims.

Accordingly, the present invention is based on the general idea of designing a transmission device with two gear stages and an associated clutch for each gear stage, the clutches being axially spaced apart from one another. Thus, an increased radial installation space is available for the respective gear stage, in particular in comparison with radially successive clutches known from the prior art. In this way, the transmission ratios between an input shaft and an output shaft of the transmission device are not restricted or the restriction is least reduced. In this way, an increased variability of transmission ratios can be implemented with the transmission device with reduced radial installation space.

According to the idea of the invention, the transmission device comprises the input shaft as well as the output shaft. The input shaft is rotatable about an axial axis of rotation in a first direction of rotation and a second direction of rotation opposite to the first direction of rotation. The output shaft surrounds the input shaft radially on the outside. The transmission device further comprises a planetary gearing drivingly connected to the input shaft. The planetary gearing includes a first gear stage. The first gear stage is connectable to the output shaft via a first clutch. The first clutch is such that the first clutch connects the first gear stage to the output shaft during rotations of the input shaft in the first direction of rotation, and disconnects the first gear stage from the output shaft during rotations of the input shaft in the second direction of rotation. The planetary gearing further comprises a second gear stage. The second gear stage is connectable to the output shaft via a second clutch. The second clutch is such that the second clutch connects the second gear stage to the output shaft during rotations of the input shaft in the second direction of rotation, and disconnects the second gear stage from the output shaft during rotations of the input shaft in the first direction of rotation. The clutches are arranged on a radially inner side of the output shaft. In addition, the clutches are axially spaced apart from each other.

The directions given here each refer to the axial axis of rotation. Thus "axial" means parallel or coaxial to the axis of rotation. In addition, "radial" means perpendicular or transverse to the axis of rotation and thus perpendicular or transverse to axial.

In the connected state of the respective gear stage with the output shaft, the output shaft is driven via this gear stage.

The output shaft of the transmission device is advantageously rotatable about the axis of rotation. It is preferable if the output shaft rotates in one direction of rotation, for example in the first direction of rotation, independently of the gear stage connected to it in each case. The gear device, in particular the planetary gearing, is designed accordingly.

The Transmission device is used in a drive. The drive advantageously has an electric motor. The electric motor comprises a rotor that rotates during operation. The rotor, thereby, rotates about the axis of rotation and is connected to the input shaft in a torque proof manner. In particular, the input shaft can correspond to the rotor. Thus, the electric motor is such that, in operation, the rotor rotates about the axis of rotation in the first direction of rotation and in a second direction of rotation. That is, the rotor rotates in the first direction of rotation in a first operating state and in the second direction of rotation in a second operating state. The same applies to the input shaft, which is connected to the rotor in a torque proof manner.

The drive and thus the transmission device are advantageously used in a pedelec. With the drive, it is therefore possible to auxiliary drive the pedelec. The drive is thus in particular an auxiliary drive of the pedelec.

To drive the pedelec, the drive is connected or connectable to at least one wheel of the pedelec, in particular to a single wheel of the pedelec, in terms of drivingly.

Preferably, the drive is designed as a hub drive. Advantageously, the drive is thus arranged or integrated in a wheel hub of a wheel of the pedelec. Advantageously, the output shaft corresponds to a housing of the wheel hub.

The respective gear stage advantageously corresponds to an associated transmission ratio between the input shaft and the output shaft. That is, the first gear stage connects the input shaft and the output shaft with a first transmission ratio. Moreover, the second gear stage connects the input shaft and the output shaft with a second transmission ratio, which is advantageously different from the first transmission ratio.

The respective clutch can in principle be of any design.

Preferred are embodiments in which at least one of the clutches, advantageously the respective clutch, has a freewheel.

The first clutch therefore preferably has a freewheel, which is also referred to as the first freewheel hereinafter. The first freewheel is connected to the output shaft on the inside of the output shaft. Preferably, the first freewheel is connected directly to the output shaft on the inside of the output shaft. This results in a reduced radial installation space requirement for the first clutch. As a result, the first gear stage has more radial installation space available, so that the first gear stage can be designed to be correspondingly more variable, i.e. with an increased variability of possible transmission ratios.

Particularly preferably, the first clutch corresponds to the first freewheel. This means that the first clutch is designed as a freewheel. This results in a radially reduced overall height of the first clutch. Consequently, increased radial installation space is available to the first gear stage. As a result, the first gear stage can be designed with an increased variability of possible transmission ratios.

The second clutch therefore preferably has a freewheel, which is also referred to as the second freewheel hereinafter. The second freewheel is connected to the output shaft on the inside of the output shaft. Preferably, the second freewheel is directly connected to the output shaft at the inner side of the output shaft. Thus, a reduced radial installation space requirement of the second clutch is achieved. Consequently, an increased radial installation space is available for the second gear stage, so that the second gear stage can be designed with an increased variability of possible transmission ratios.

Particularly preferably, the second clutch corresponds to the second freewheel. This means that the second clutch is designed as a freewheel. This results in a radially reduced overall height of the second clutch. Consequently, increased radial installation space is available to the second gear stage. As a result, the second gear stage can be designed with an increased variability of possible transmission ratios.

If the two clutches each have a freewheel, in particular if the clutches are each designed as a freewheel, it is preferred that the first freewheel and the second freewheel are axially spaced apart.

In principle, the planetary gearing can be of any design. The same applies to the gear stages.

In preferred embodiments, the first gear stage and the second gear stage are axially spaced apart. The axially spaced and thus offset arrangement of the gear stages results in particular in increased radial installation space being available for the respective gear stage. This means that the respective gear stage can be designed with an increased variability of possible transmission ratios.

Preferred embodiments are those in which the respective clutch is arranged radially between the associated gear stage and the output shaft. The clutches are therefore axially spaced apart and arranged radially between the associated gear stage and the output shaft. Accordingly, the gear stages each have an increased radial installation space available. As a result, the respective gear stage can be designed with an increased variability of possible transmission ratios.

The planetary gearing may have an input gearwheel that meshes with a drive gearwheel that is torque proof with the input shaft. The input gearwheel thus rotates with the input shaft during operation and hence rotates the input gearwheel which is in mesh with the input gearwheel. In this way, a simple drivingly connection of the input shaft to the planetary gearing is achieved.

In principle, the input gearwheel can function as a sun gearwheel of the first gear stage or mesh with a sun gearwheel of the first gear stage. The sun gearwheel of the first gear stage can mesh with at least one planetary gearwheel of the first gear stage.

In advantageous embodiments, the input gearwheel is connected to the first gear stage without any further transmission ratio. That is, the input gearwheel is connected to the first gear stage torque proof and free of transmission ratio. This results in a simple design of the first gear stage and thus the transmission device.

The second gear stage advantageously has a sun gearwheel drivingly connected to the input shaft and at least one planetary gearwheel meshing with the sun gearwheel. The at least one planetary gearwheel is connected to the second clutch. Thus, a transmission between the input shaft and the output shaft is achieved in a simple manner.

In preferred embodiments, the sun gearwheel of the second gear stage is connected to the input shaft via the input gearwheel. This means that both gear stages are drivingly connected to the input shaft via the same input gearwheel. In this way, to change between the gear stages it is only necessary to change between the directions of rotation. In particular no additional actuators for change between the gear stages is required. As a result, in addition to a simplified change between the gear stages, a simplified design of the transmission device is achieved.

The transmission device preferably has a body comprising the input gearwheel and the sun gearwheel. The body is also referred to as the planetary body in the following. Thus, the input gearwheel and the sun gearwheel are torque proof to each other in a simple and compact manner. As a result, a drivingly connection of the sun gearwheel to the input shaft is achieved in a simple and compact manner.

The second gear stage can alternatively be drivingly connected to the input shaft via an associated input gearwheel, different from the aforementioned input gearwheel. It is also conceivable that the sun gearwheel is engaged with the drive gearwheel or a drive gearwheel different from the aforementioned drive gearwheel and torque proof with the drive shaft.

The transmission device advantageously has an axle which is rotatable about the axis of rotation and carries the planetary gearing. The axle is also referred to as the axle body hereinafter. This leads to a simple design of the planetary gearing with reduced space requirements.

Preferably, the axle body carries the at least one planetary gearwheel of the second gear stage. This results in a simple and compact design of the transmission device.

It is also preferable if the axle body carries a ring gear of the planetary gearing. As a result, the ring gear is torque proof with the axle body in a simple and compact manner and can thus be rotated about the axis of rotation. Advantageously, the ring gear is arranged radially between the input gearwheel and the output shaft. Preferably, the input gearwheel is in mesh with the ring gear. This further reduces the installation space requirement.

It is understood that, in addition to the transmission device, the drive and the pedelec are each also within the scope of the present invention.

Further important features and advantages of the invention are apparent from the dependent claims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically
- Fig. 1: a section through a drive with a transmission device in a pedelec,
- Fig. 2: a section through the Transmission device.

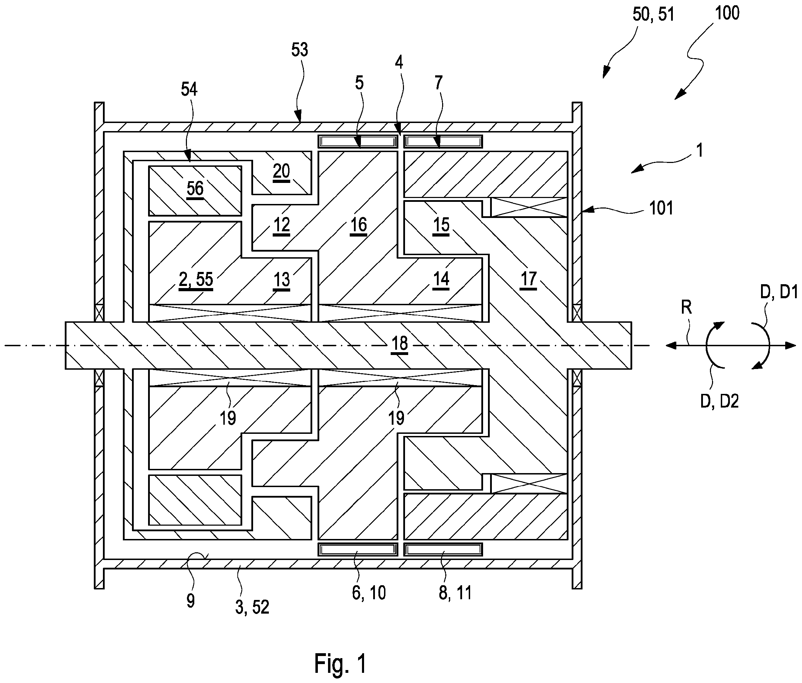

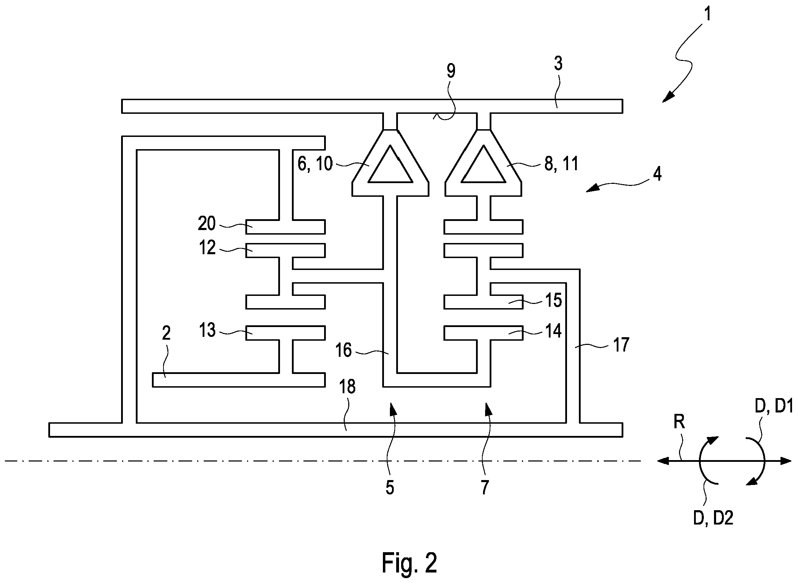

A transmission device 1 shown by way of example in Figures 1 and 2 is used in a drive 50. The drive 50 is used in particular in a pedelec 100 to drive a wheel 101 of the pedelec 100, which is not otherwise shown. For this purpose, the drive 50 is drivingly connected or connectable to the wheel 101.

The drive 50 has an electric motor 54. The electric motor 54 has a rotor 55 and a stator 56, which interact during operation so that the rotor 55 rotates about an axial axis of rotation R. The rotor 55 rotates about the axial axis of rotation R in two mutually opposite directions D. This means that the rotor 55 rotates in a first direction of rotation D1 in a first operating state and in a second direction of rotation D2 opposite to the first direction of rotation D1 in a second operating state.

The transmission device 1 has an input shaft 2 which is rotatable about the axis of rotation R. The input shaft 2 is connected to the rotor 55 in a torque proof manner. That is, in operation, the input shaft 2 rotates about the rotational axis R in the first direction of rotation D1 and in the second direction of rotation D2. In particular, the input shaft 2 rotates in the first direction of rotation D1 in the first operating state and in the second direction of rotation D2 in the second operating state. The transmission device 1 further comprises an output shaft 3, which surrounds the input shaft 2 radially on the outside. For transmitting the torque of the input shaft 2 to the output shaft 3, the transmission device 1 has a planetary gearing 4. The planetary gearing 4 is drivingly connected to the input shaft 3 and transmits the torque with two possible transmission ratios to the output shaft 3. For this purpose, the planetary gearing 4 has two gear stages 5, 7, each of which can be connected to the output shaft 3 via an associated clutch 6, 8 depending on the direction of rotation D. The planetary gearing 4 thus has a first gear stage 5. The first gear stage 5 is connectable to the output shaft 3 via a first clutch 6, such that the first clutch 6 connects the first gear stage 5 to the output shaft 3 during rotations of the input shaft 2 in the first direction of rotation D1 and disconnects the first gear stage 5 from the output shaft 3 during rotations of the input shaft 2 in the second direction of rotation D2. In addition, the planetary gearing 4 has a second gear stage 7. The second gear stage 7 is connectable to the output shaft 3 via a second clutch 8, such that the second clutch 8 connects the second gear stage 7 to the output shaft 3 during rotations of the input shaft 2 in the second direction of rotation D2 and disconnects the second gear stage 7 from the output shaft 3 during rotations of the input shaft 2 in the first direction of rotation D1. Thus, if the input shaft 2 rotates in the first direction of rotation D1, the first gear stage 5 transmits the torque to the output shaft 3 with a first transmission ratio. In contrast, if the input shaft 2 rotates in the second direction of rotation D2, the second gear stage 7 transmits the torque to the output shaft 3 with a second transmission ratio. As can be seen from the figures, the respective clutch 6, 8 is arranged on a radially inner side 9 of the output shaft 3. In addition, the clutches 6, 8 are axially spaced apart. As a result, the radially available installation space available to both gear stages 5, 7 is maximized or at least increased. As a result, it is possible to implement more variable transmission ratios with the respective gear stage 5, 7.

The directions given here each refer to the axial axis of rotation R. Here, "axial" means parallel or coaxial to the axis of rotation R. In addition, "radial" means transverse to the axis of rotation R and thus transverse to axial.

As can be seen from the figures, the gear stages 5, 7 follow one another axially and are axially spaced apart. In addition, the respective clutch 6, 8 is arranged radially between the associated gear stage 5, 7 and the output shaft 3.

As can be seen from Figure 2, in the embodiments shown the respective clutch 6, 8 is designed as a freewheel 10, 11. That is, the first clutch 6 is designed as a first freewheel 10, which in the shown exemplary embodiments is connected to the output shaft 3 at the inner side 9 of the output shaft 3. In addition, the second clutch 8 is formed as a second freewheel 11, which is connected to the output shaft 3 at the inner side 9 of the output shaft 3. In the exemplary embodiments shown, the respective freewheel 10, 11 is thereby further directly connected to the inner side 9 of the output shaft 3. In the exemplary embodiments shown, the first freewheel 10 and the second freewheel 11 are thus axially spaced apart from each other.

As can be seen from the figures, in the exemplary embodiments shown, the planetary gearing 4 has an input gearwheel 12 which meshes with a drive gearwheel 13 torque proof with the input shaft 2. Thus, the planetary gearing 4 is drivingly connected to the input shaft 2. Thereby, the input gearwheel 12 in the shown exemplary embodiments is connected to the first gear stage 5 torque proof and in a transmission-ratio-free and thus free of transmission ratio. For this purpose, the input gearwheel 12 in the exemplary embodiments shown is part of a body 16 connected to the first clutch 6 in a torque proof manner. The body 16 is also referred to hereinafter as the planetary body 16. The planetary body 16 thus rotates with the input gearwheel 12 during operation.

In the exemplary embodiments shown, the second gear stage 7 has a sun gearwheel 14 drivingly connected to the input shaft 2 and at least one planetary gearing 15 meshing with the sun gearwheel 14. The at least one planetary gearing 15 is further connected to the second clutch 7, such that a gear ratio occurs. In the exemplary embodiments shown, the second gear 7 is also drivingly connected to the input shaft 2 via the input gearwheel 12. Thus, no separate actuator is necessary for shifting between the gear stages 5, 7, so that a reversal of the direction of rotation D and thus a change between in the first operating state and the second operating state results in a change between the gear stages 5, 7. In the exemplary embodiments shown, the sun gearwheel 14 is also part of the planetary body 16 for this purpose.

In the exemplary embodiments shown, the transmission device 1 has an axle 17 which can rotate about the axis of rotation R and which carries the planetary gearing 4. The axis 17 is also referred to as the axis body 17 hereinafter. The axis body 17 thus rotates in operation about the axis of rotation R. In operation, as can be seen from Figure 1, the axis body 17 can also be rotated about the axis of rotation R relative to the rotor 55 and consequently relative to the input shaft 2. For this purpose, in the exemplary embodiment shown in Figure 1, a bearing 19 is arranged between an axially extending axle shaft 18 of the axle body 17 and the rotor 55. As can be seen from the figures, the axle body 17 carries the at least one planetary gearwheel 15 and a ring gear 20. The ring gear 20 is arranged on the side of the input gearwheel 12 facing radially away from the input shaft 2 and radially between the input gearwheel 12 and the output shaft 3. In addition, the input gearwheel 12 is in mesh with the ring gear 20.

As can be seen from Figure 1, the torque proof connection between the input shaft 2 and the rotor 55, in the exemplary embodiment shown, is realized in that the input shaft 2 corresponds to the rotor 55.

As can be seen from the figures, the drive 50 in the shown exemplary embodiments is designed as a hub drive 51. For this purpose, in the exemplary embodiments shown, the output shaft 3 corresponds to a housing 52 of a wheel hub 53 of the otherwise not shown wheel 101 of the pedelec 100. *****

## Claims

1. Transmission device (1) for a drive (50), in particular for a pedelec (100),
- with an input shaft (2) which is rotatable about an axial axis of rotation (R) in a first direction of rotation (D1) and a second direction of rotation (D2) opposite to the first direction of rotation (D1),
- with an output shaft (3) surrounding the input shaft (2) radially on the outside,
- with a planetary gearing (4) drivingly connected to the input shaft (2),
- wherein the planetary gearing (4) has a first gear stage (5) which can be connected to the output shaft (3) via a first clutch (6) in such a way that the first clutch (6) connects the first gear stage (5) to the output shaft (3) during rotations of the input shaft (2) in the first direction of rotation (D1 ) and disconnects the first gear stage (5) from the output shaft (3) during rotations of the input shaft (2) in the second direction of rotation (D2),
- wherein the planetary gearing (4) has a second gear stage (7) which can be connected to the output shaft (3) via a second clutch (8) in such a way that the second clutch (8) connects the second gear stage (7) to the output shaft (3) during rotations of the input shaft (2) in the second direction of rotation (D2) and disconnects the second gear stage (7) from the output shaft (3) during rotations of the input shaft (2) in the first direction of rotation (D1),
**characterized in**
**that** the clutches (6, 8) are arranged on a radially inner side (9) of the output shaft (3) and are axially spaced apart.

2. Transmission device according to claim 1,
**characterized in**
**that** the first clutch (6) has a first freewheel (10) which is connected directly to the output shaft (3) on the inside (9) of the output shaft (3).

3. Transmission device according to claim 1 or 2,
**characterized in**
**that** the second clutch (8) has a second freewheel (11) which is connected directly to the output shaft (3) on the inner side (9) of the output shaft (3).

4. Transmission device according to claim 2 and 3,
**characterized in**
**that** the first freewheel (10) and the second freewheel (11) are axially spaced apart from each other.

5. Transmission device according to one of the claims 1 to 4,
**characterized in**
**that** the first gear stage (5) and the second gear stage (7) are axially spaced apart.

6. Transmission device according to one of the claims 1 to 5,
**characterized in**
**that** the respective clutch (6, 8) is arranged radially between the associated gear stage (5, 7) and the output shaft (3).

7. Transmission device according to one of the claims 1 to 6,
**characterized in**
**that** the planetary gearing (4) has an input gearwheel (12) which is in mesh with a drive gearwheel (13) torque proof with the input shaft (2).

8. Transmission device according to claim 7,
**characterized in**
**that** the input gearwheel (12) is connected to the first gear stage (5) torque proof and free of transmission ratio.

9. Transmission device according to any one of claims 1 to 8 , **characterized in**
- **that** the second gear stage (7) has a sun gearwheel (14), which is drivingly connected to the input shaft (2), and at least one planetary gearwheel (15), which is in mesh with the sun gearwheel (14),
- **that** the at least one planetary gearwheel (15) is connected to the second clutch (7).

10. Transmission device according to and 9 claim 7 or 8,
**characterized in**
**that** the transmission device (1) has a planetary body (16) comprising the input gearwheel (12) and the sun gearwheel (14), so that the sun gearwheel (14) is drivingly connected to the input shaft (2) via the input gearwheel (12).

11. Transmission device according to one of the claims 1 to 10, **characterized in**
**that** the transmission device (1) has an axle body (17) which is rotatable about the axis of rotation (R) and which carries the planetary gearing (4).

12. Drive (50) for a pedelec (100),
- with an electric motor (54) which has a rotor (55) which, in operation, rotates about an axial axis of rotation (R) in a first direction of rotation (D1) and a second direction of rotation (D2) opposite the first direction of rotation (D1),
- with a transmission device (1) according to one of the claims 1 to 11, wherein the input shaft (2) is connected to the rotor (55) in a torque proof manner.

13. Drive according to claim12 ,
**characterized in**
**that** the drive (50) is designed as a hub drive (51).

14. Pedelec (100) with a drive (50) according to claim 12 or 13, wherein the drive (50) is drivingly connected or connectable to at least one wheel (101) of the pedelec (100).
